# EUROPEAN PATENT SPECIFICATION

(11) **EP 3 504 408 B1**
(45) Date of publication and mention of the grant of the patent: **21.04.2021**
(21) Application number: 17844033.5
(22) Date of filing: 09.08.2017
(51) Int. Cl.: F01P 7/14, H01M 10/613, H01M 10/625, B60K 11/04, F01P 3/12, B60K 1/00, B60K 1/04, B60K 11/02

(54) **A COOLING SYSTEM FOR AN ELECTRIC POWER UNIT IN A VEHICLE**
KÜHLSYSTEM FÜR EIN ELEKTROAGGREGAT IN EINEM FAHRZEUG
SYSTÈME DE REFROIDISSEMENT POUR BLOC D'ALIMENTATION ÉLECTRIQUE DANS UN VÉHICULE

(30) Priority: 23.08.2016 SE 1651128
(43) Date of publication of application: 03.07.2019
(73) Proprietor: Scania CV AB, 151 87 Södertälje (SE)
(72) Inventor: MUSTONEN, Markus, 135 42 Tyresö (SE)
(74) Representative: Scania CV AB
(86) International application number: PCT/SE2017/050807
(87) International publication number: WO 2018/038662

(56) References cited:
- EP-A2- 2 392 486
- EP-A2- 3 012 133
- DE-A1-102010 023 476
- DE-A1-102012 108 043
- DE-A1-102012 108 043
- DE-A1-102014 115 377
- DE-A1-102014 115 377
- FR-A1- 2 969 050
- JP-A- 2010 173 445
- JP-A- 2010 173 445
- JP-A- 2014 158 393
- US-A1- 2012 199 313

## Description

### BACKGROUND OF THE INVENTION AND PRIOR ART

The present invention relates to an electric power unit for a vehicle comprising a cooling system for the electric power unit according to the preamble of claim 1.

A plug-in hybrid electric vehicles may be powered by an electric power unit in combination with some other form of power unit such as a combustion engine. The electric power unit may comprise an electric machine which alternately works as motor and generator, an electric energy storage for storing of electrical energy and power electronics for controlling the flow of electrical energy between the electrical energy storage and the electric machine. The power electronics may include a DC converter and an inverter for conducting electrical energy between the electrical energy storage and the electric machine. The electrical energy storage and the power electronics are heated during operation. The electrical energy storage and power electronics are designed to operate within a specific temperature range. The electrical energy storage may have an optimal efficient within the temperature range of 20-25°C. The power electronics can usually withstand a temperature up to about 60-70 °C. Consequently, it is suitable to cool the electrical energy storage and the power electronics with coolant of different temperatures.

Plug-in hybrid electric vehicles and pure electric vehicles can be rapidly charged at charging stations. In this case, a lot of electric energy is supplied to the electrical energy storage in a very short time. As a consequence, the electrical energy storage will be heated. In order to avoid damages of the electrical energy storage during the charging process, it has to be cooled. Furthermore, a cooling of the electrical energy storage to a temperature within its efficient operating temperature range favors the charging process.

DE 10 2014 115 377 A1 shows a cooling system comprising at least a high temperature radiator and a low temperature radiator mounted in a front region of a motor vehicle. The cooling system comprises a first circuit which cools electric batteries and a second circuit which cools power electronic components. The cooling system comprises valves which are able to selectively connect the first circuit to the high temperature radiator and the second circuit to the low temperature radiator. Furthermore, the valves are able to separate the first circuit from the high temperature radiator and connect the second circuit to the high temperature radiator and the low temperature radiator which radiators are arranged in parallel. Alternatively, the valves are able to separate the second circuit from the low temperature radiator and connect the first circuit to the parallel arranged radiators.

JP 2010 173445 A describes a cooling system for a hybrid vehicle. The cooling system comprises a first cooling circuit with a first radiator for cooling of a combustion engine and a second cooling circuit with a second radiator for cooling of an electric motor and an inverter. The cooling system comprises connection portions and switching valves. The switching valves are settable in a first position, in which coolant circulates separately in the respective cooling circuits and in a second position in which the coolant circulates from the second cooling circuit to the first cooling circuit and back to the second cooling circuit.

### SUMMARY OF THE INVENTION

The object of the present invention is to provide a cooling system for cooling of an electrical energy storage and power electronics in a vehicle during operation of the vehicle which also is able to provide a sufficient cooling of the electrical energy storage when it is charged by an external electrical power source.

The above mentioned object is achieved by the electric power unit according to claim 1. The cooling system of the electric power unit comprises a low temperature circuit for cooling of the electrical energy storage and a high temperature circuit for cooling of power electronics during operation of the vehicle. During a rapid charging process more heat energy is generated in the electrical energy storage than during operation of the vehicle. As a consequence, the low temperature circuit is usually not able to perform a sufficient cooling of the electrical energy storage during a rapid charging process. However, the power electronics does not need to be cooled during the charging process. In view of this fact, it is possible to use the radiator in the high temperature circuit in addition to the radiator in the low temperature circuit in order to cool the coolant to a necessary low temperature before it cools the electrical energy storage during the charging process. According to the invention, the cooling system comprises components configured to create a modified flow circuit for the coolant in a charging mode in which the coolant is cooled in the low temperature radiator and in the high temperature radiator before it is directed to the electric energy storage. In this case, the coolant is cooled in series in the two radiators. The additional cooling of the coolant in the high temperature radiator increases the cooling capacity of the cooling system significantly. The increased cooling capacity of the cooling system in the charging mode makes it possible to provide a sufficient cooling of the electrical energy storage when it is rapidly charged by an external electrical power source. In this case, it is possible to prevent heating of the electrical energy storage to a too high temperature which can reduce the life time of the electrical energy storage.

Said components comprise a first valve member which in the charging mode is configured to direct coolant, via a first connection line, from the low temperature circuit to the high temperature circuit in a position upstream of the high temperature radiator, and a second valve member which in the charging mode is configured to direct the coolant, back to the low temperature circuit via a second connection line when the coolant has been cooled in the high temperature radiator. Such components creates a modified flow circuit in a simple manner in the charging mode.

According to the invention, the connection lines are connected to the low temperature circuit in positions downstream of the low temperature radiator. In this case, the coolant is cooled in a first step in the low temperature radiator before it is directed to the high temperature circuit where it is cooled in the high temperature radiator in a second step.

Alternatively, and also accordingly to the invention, the connection lines are connected to the low temperature circuit in positions upstream of the low temperature radiator. In this case, the coolant is directed from the low temperature circuit to the high temperature radiator in the high temperature circuit before it reaches the low temperature radiator. When the coolant has been cooled in the high temperature radiator, it is directed back to the low temperature circuit where it is cooled in the low temperature radiator in a second step.

According to an embodiment of the invention, the cooling system comprises a one way valve arranged in the high temperature a position upstream of a connection point of the first connection line. The existence of the one way valve ensures that the entire coolant flow from the low temperature circuit is directed towards the high temperature radiator in the high temperature circuit and not in the opposite direction.

According to an embodiment of the invention, the cooling system comprises a refrigeration system configured to cool the coolant in the low temperature circuit in a chiller and that the coolant is cooled in a third step in the chiller before it cools the electrical energy storage in the charging mode. When ambient temperature is high, it is usually not enough to cool the coolant in the low temperature radiator and in the high temperature radiator for maintaining a sufficient temperature of the electrical energy storage. The existence of the chiller makes it possible to provide a cooling of the coolant in a third step to a lower temperature than ambient temperature before it is used to cool the electrical energy storage.

According to an embodiment of the invention, the cooling system comprises a charging unit configured to receive electric energy from an external power source and transfer it to the electric energy storage and that the circulating coolant in the modified circuit also is used to cool the charging unit during charging of the electrical energy storage. Usually, a plugin hybrid electrical vehicle comprises some kind of charging unit for charging of the electrical energy storage. The charging unit comprises electrical components which are heated and requires cooling during the charging process.

According to an embodiment of the invention, the cooling system comprises a control unit configured to receive information indicating when electric energy is transferred from an external electrical power source to the electrical energy storage and to set the cooling system in the charging mode when it is the case. Alternatively, the control unit may set the cooling system in the charging mode when it receives information indicating that an external electrical energy source has been connected to the electrical energy storage. In these cases, the cooling system is automatically set in the charging mode by the control unit. According to a further alternative, the cooling system may be manually set in a charging mode by a person by means of a button or the like in the vehicle.

According to an embodiment of the invention, the control unit is configured to receive information about a temperature related to the temperature of the electrical energy storage, and to control the cooling system by means of this information in the charging mode. The control unit may receive information from a temperature sensor arranged in the electrical energy storage or from a temperature sensor sensing the temperature of the coolant leaving the electrical energy storage. During a rapid charging process, a maximum cooling capacity of the cooling system may be required during a main part of the charging time in order to provide a sufficient cooling of the electrical energy storage. However, a maximum cooling effect of the cooling system requires a high energy consumption for operation of radiator fans and the refrigerant circuit. Thus, it is suitable to adjust the cooling effect of the cooling system during parts of the charging time when the required cooling effect of the cooling system is lower in order to save energy.

According to an embodiment of the invention, the control unit is configured to maintain the temperature of the electrical energy storage within a predetermined temperature range in the charging mode. Electrical energy storages usually have an optimal efficient within a specific temperature range. In order to reduce the charging time and provide an effective charging of the electrical energy storage, it is suitable to maintain the temperature of the electrical energy storage within this optimal efficient temperature range during the charging process.

According to an embodiment of the invention, the control unit is configured to control the speed of at least one radiator fan in order to provide an adjustable cooling of the coolant in the high temperature radiator. The control unit may control the speed of the radiator fan and the cooling of the coolant in the high temperature radiator during operation of the vehicle and during charging of the electrical energy storage. In a corresponding manner, the control unit may control the speed of at least one radiator fan in order to provide an adjustable cooling of the coolant in the low temperature radiator. The control unit may control the speed of the radiator fan and the cooling of the coolant in the low temperature radiator during operation of the vehicle and during charging of the electrical energy storage.

According to an embodiment of the invention, the control unit is configured to control the operation of a compressor in the refrigerant circuit in order to provide an adjustable cooling of the coolant in the chiller. In this case, it is possible to adjust the cooling of the coolant in the chiller with the purpose to maintain the temperature of the electrical energy storage within said specific temperature range. Furthermore, the control unit may be configured to control the speed of a coolant pump in order to provide an adjustable coolant flow rate to the electrical energy storage. The coolant pump may be an electrical coolant pump. The speed of such a coolant pump can be adjusted in a simple manner in order to adjust the cooling of the electrical energy storage.

According to an embodiment of the invention, the high temperature radiator is arranged in a position downstream of the low temperature radiator with respect to the direction of the cooling air stream through the radiators. In this case, the coolant in the low temperature circuit is cooled to a lower temperature than the coolant in the high temperature circuit. Such a temperature difference between the coolants in the respective cooling circuits is necessary in order to provide a cooling of the electric energy storage to a lower temperature than the power electronics during operation of the vehicle.

### BRIEF DESCRIPTION OF THE DRAWING

In the following a preferred embodiment of the invention is described, as an example, and with reference to the attached drawing, in which:

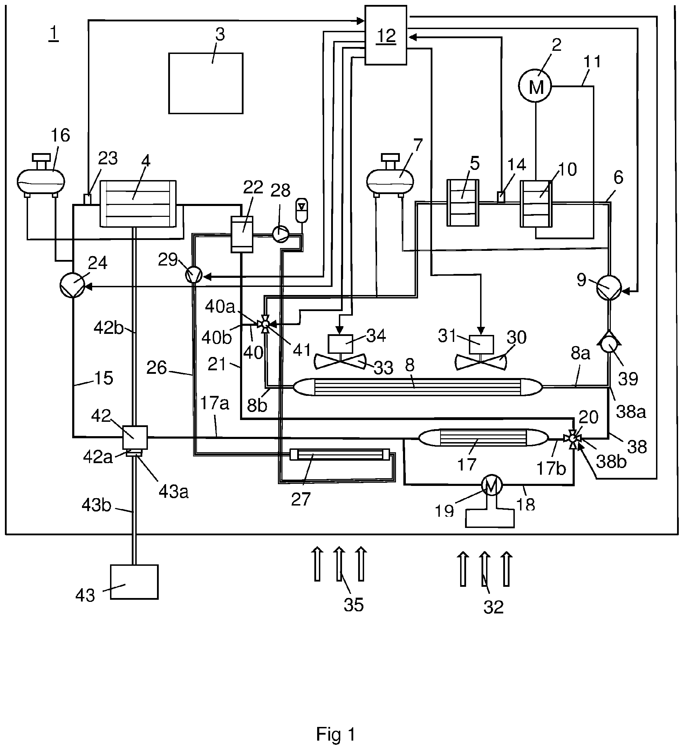

- Fig. 1: shows a cooling system according to an embodiment of the invention.

### DETAILED DESCRIPTION OF A PREFERRED EMBODIMENT OF THE INVENTION

Fig. 1 shows a cooling system for a schematically indicated hybrid vehicle 1. The hybrid vehicle 1 is a powered by an electric machine 2 and a combustion engine 3. The electric machine works alternately as motor and generator. The hybrid vehicle 1 comprises an electric energy storage 4 for storing of electrical energy and power electronics 5 for controlling the flow of electrical energy between the electrical energy storage 4 and the electric machine 2. The electrical energy storage 4 and the power electronics 5 are heated during operation. Thus, the electrical energy storage 4 and the power electronics 5 need to be cooled during operation. The electrical energy storage 4 and the power electronics 5 are design to work within a respective specific temperature range. The electrical energy storage 4 is designed to have a lower temperature than the power electronics 5. The electrical energy storage 4 may have an optimal efficiency temperature within the temperature range of 20-25°C. The power electronics 5 can usually withstand a temperature up to about 60-70 °C. During certain operating conditions such as after a cold start, the temperature of the electrical energy storage 4 can be too low. In this case, it is suitable to use the cooling system for heating the electrical energy storage 4.

The cooling system comprises a high temperature circuit 6 with a circulating coolant. The high temperature circuit 6 is indicated by a double line in fig. 1. The high temperature circuit 6 comprises an expansion tank 7. The high temperature circuit 6 further comprises a high temperature radiator 8 where the coolant is cooled. A first coolant pump 9 circulates the coolant in the high temperature circuit 6. The first coolant pump 9 may be an electric pump. The pump 9 directs the coolant, via a high temperature radiator inlet line 8a, to the high temperature radiator 8. The coolant leaving the high temperature radiator 8 is directed, via a high temperature radiator outlet line 8b, to the power electronics 5. The coolant is directed from the power electronics 5 to a heat exchanger 10. The coolant cools an oil in the heat exchanger 10 which is circulated in circuit 11 for cooling of the electric machine 2. The coolant leaving the heat exchanger 10 is returned to the first coolant pump 9. A control unit 12 controls the first coolant pump 9 and thus the coolant flow rate in the high temperature circuit 6. The coolant in the high temperature circuit 6 is used to cool the power electronics 5 and the electric machine 2 during operation of the vehicle 1.

The cooling system comprises a low temperature circuit 15 with a circulating coolant. The low temperature circuit 15 comprises an expansion tank 16. The low temperature circuit 15 further comprises a low temperature radiator 17 where the coolant in the low temperature circuit 15 is cooled. The coolant enters the low temperature radiator 17 via a low temperature radiator inlet line 17a and leaves the low temperature radiator 17 via a low temperature radiator outlet line 17b. The low temperature circuit 15 comprises a bypass line 18 having an inlet in the low temperature radiator inlet line 17a and an outlet in the low temperature radiator outlet line 17b. Thus, the bypass line 18 can direct coolant past the low temperature radiator 17. The bypass line 18 comprises a heating device 19 by which it is possible to heart the coolant in the bypass line 18. The low temperature radiator outlet line 17b comprises a valve device in the form of a four way valve 20 by which it is , for example, possible to direct the coolant flow through the low temperature radiator 17 or the bypass line 18 during operation of the vehicle 1. The four way valve 20 is controlled by the control unit 12. During operation of the vehicle 1, the four way valve 20 directs the outlet coolant flow to a coolant line 21 and a chiller 22 where the coolant in the low temperature circuit 15 can be cooled by a refrigerant circulating in a refrigerant circuit 26. Thereafter the coolant enters the electrical energy storage 4. A temperature sensor 23 senses the temperature of the coolant when it leaves the electrical energy storage 4. The coolant leaving the electrical energy storage 4 enters a second coolant pump 24 circulating the coolant in the low temperature circuit. The second coolant pump 24 is an electric pump controlled by the control unit 12. The second coolant pump 24 directs the coolant towards the low temperature radiator 17. The coolant in the low temperature circuit is used to cool the electrical energy storage 4 but it can also be used to heat the electrical energy storage 4.

The refrigeration circuit 26 comprises a condenser 27 where the refrigerant is condensed. The liquefied refrigerant is directed to an expansion valve 28 where it experiences a pressure drop and a significantly lower temperature. Thereafter, the refrigerant enters an evaporator in the form of the chiller 22 in the low temperature circuit 15. The refrigerant is heated by the coolant in the chiller 22 such that it vaporizes. The vaporized refrigerant is directed to a compressor 29. The compressor 29 provides a compression of the refrigerant such that it obtains an increased pressure and an increased temperature when it the condenser 27.

The cooling system comprises a first radiator fan 30 driven by a first electric motor 31. The control unit 12 controls the first electric motor 31 and the speed of the first radiator fan 30. The radiator fan 30 provides a first air flow 32 through a half of the high temperature radiator 8 in the high temperature circuit and the low temperature radiator 17 in the low temperature circuit 15. The low temperature radiator 17 is arranged in a position upstream of the high temperature radiator 8 with respect to the flow direction of the first air flow 32. Thus, the coolant in the low temperature radiator 17 is cooled to a lower temperature than the coolant in the high temperature radiator 8. The cooling system comprises a second radiator fan 33 driven by a second electric motor 34. The control unit 12 controls the second electric motor 34 and the speed of the second radiator fan 33. The second radiator fan 33 provides a second air flow 35 through a remaining half of the high temperature radiator 8 and the condenser 27 of the refrigeration system. The condenser 27 of the refrigerant system 26 is arranged in a position upstream of the high temperature radiator 8 with respect to the flow direction of the second air flow 35. Usually, the refrigerant is cooled to a lower temperature in the condenser 27 than the coolant in the high temperature radiator 8 but it depends on condenser load, condenser performance and radiator performance.

The cooling system comprises a first connection line 38 by which it is possible to direct coolant from the temperature circuit 15 to the high temperature circuit 6. The first connection line 38 has an extension between a first end 38a connected to an outlet of the four way valve 20 and a second end 38b connected to the high temperature radiator inlet line 8a. The second end 38b is arranged in a position downstream of a one way valve 39 and upstream of the high temperature radiator 8 in the high temperature circuit 6. The coolant flow through the first connection line 38 is controlled by the four way valve 20. The cooling system comprises a second connection line 40 by which it is possible to direct coolant back from the high temperature circuit 15 to the low temperature circuit 6. The coolant flow through the second connection line 40 is controlled by a three way valve 41. The second connection line 40 has an extension between a first end 40a connected to an outlet of a three way valve 41 and a second end 40b connected to the coolant line 21 in the low temperature circuit.

The vehicle 1 comprises a charging unit 42 making it possible to recharge the electrical energy storage 4 when it has a low charge. The charging unit 42 is electrically connected to the electrical energy storage 4, via electric cables 42a or the like. The electrical energy storage 4 can be charged in a charging station. In this case, the electrical energy storage 4 receives electrical energy from a schematically indicated electrical power source 43 via the charging unit 42. In this case, the charging unit 42 comprises a socket 42a and the charging station a plug 43a to be connected the socket 42a. A cable 43b is arranged between the plug 43 and the electrical power source 43. During a charging process, electrical energy is transferred from the power source 43, via the cables 43, the charging unit 42 and the cables 42a, to the electrical energy storage 4. However, it is possible to transfer electrical energy from an electrical power source 43 to an electrical energy storage 4 in other ways. Electrical energy may, for example be transferred wirelessly in an inductive charging station.

During operation of the hybrid vehicle 1, the control unit 12 sets the cooling system in an operating mode. In the operating mode, the control unit 12 receives substantially continuously information about the temperature of the coolant from in the high temperature circuit 6 from the first temperature sensor 14 and information about the temperature of the coolant in the low temperature circuit 15 from the second temperature sensor 23. The temperatures of the coolants are related to the temperatures of the electrical energy storage 4 and the power electronics 5. The control unit 12 controls the speed of the first radiator fan 30 and the second radiator fan 33 and thus the cooling of the coolant in the high temperature radiator 8, the cooling of the coolant in the low temperature radiator 17 and the cooling of the refrigerant in the condenser 27.

In case the electrical energy storage 4 has a too low temperature, the control unit 12 can reduce the actual speed of the first radiator fan 30 and the cooling of the coolant in the low temperature radiator 17. Alternatively, the control unit 12 can reduce the actual speed of the second radiator fan 33 and reduce the cooling of the refrigerant in the condenser 27. The control unit 12 also can shut off the compressor 29 in the refrigeration system 26 and eliminate the cooling of the coolant in the chiller 22. Furthermore, the control unit 12 can set the four way valve 20 in a bypass position in which it directs the coolant flow, via the bypass line 18, past the low temperature radiator 17. In this case, the control unit 12 may activate the heating device 19 such that it heats the coolant before it enters the electrical energy storage 4. On the other hand, in case the electrical energy storage 4 has a too high temperature, the control unit 12 can increase the speed of the first fan 30 such that the coolant is cooled to a lower temperature in the low temperature radiator 17. Alternately or in combination, the control unit 12 can activate the compressor 29 and provide an increased cooling of the coolant in a second step in the chiller 22 before it enters the electrical energy storage 4. In order to further increase the cooling of the second coolant, the control unit 12 can increase the actual speed of the radiator fan 33 such that the refrigerant receives a lower condensation temperature in the condenser 27 which also results in an increased cooling of the coolant in the chiller 22.

In case the power electronics 5 has a too low temperature, the control unit 12 can reduce the actual speed of the radiator fan 30 and/or the actual speed of the second fan 33 such that the coolant leaving the high temperature radiator 8 receives a somewhat higher temperature. In case the power electronics 5 has a too high temperature, the control unit 12 can increase the speed of the first fan 30 and/or the speed of the second fan 33 such that the first coolant is cooled to a lower temperature in the radiator 8. Consequently, the control unit 12 has a lot of options to regulate the temperature of the coolant in the low temperature circuit 15 before it cools the electrical energy storage 4 and the coolant in the high temperature circuit 6 before it cools the power electronics 5. The control unit 12 has access to information about the most energy efficient option to cool the electrical energy storage 4 and the power electronics 5 to a temperature within an efficiency operating temperature range. The most energy efficient option can be defined as a minimum supply of electric energy to the radiator fans 30, 31 and to the compressor 29 of the refrigeration system 26.

During a charging process of the electrical energy storage 4 in a charging station, the cooling system is set in a charging mode. The cooling system may be automatically set in a charging mode by the control unit 12 when it receives information indicating that electrical energy is or is to be transferred to the charge unit 42 and the electrical energy storage 4. Alternatively, cooling system can be manually set in the charging mode, by a button or the like when the electrical energy storage 4 is to be charged. In the charging mode, the control unit 12 starts the second coolant pump 24. The control unit 12 sets the four way valve 20 in a position in which it directs the coolant leaving the low temperature radiator 17 to the first connection line 38 and the high temperature circuit 6. The three way valve 41 is positioned such that it directs the coolant back to the low temperature circuit 8b when it has passed through the high temperature radiator 8. In the charging mode, the coolant is cooled in a first step in the low temperature radiator 17, in a second step in the high temperature radiator 8 and in a third step in the chiller 22 before it enters the electrical energy storage 4. In this case, it is possible to use the low temperature radiator 17 and the chiller 22 in the low temperature circuit and the high temperature radiator 8 in the high temperature circuit for cooling the coolant which cools the electrical energy storage 4. Since the vehicle 1 is not in operation during the charging process, there is no cooling demand of the power electronics 5 and the electrical machine 2 and the first coolant pump 9 is shut off.

During the charging process, the control unit 12 receives substantially continuously information from the temperature sensor 23 about the temperature of the coolant leaving the electrical energy storage 4. During a rapid charging process a lot of heat energy is generated in the electrical energy storage 4 and in the charging unit 24. It is important to cool the electrical energy storage 4 such that it does not receive a too high temperature. In such a case, the life time of the electrical energy storage 4 can be reduced. Furthermore, it is an advantage to maintain the temperature of electrical energy storage 4 within its optimal efficient temperature range during the charging process. The optimal efficient temperature range may be about 20-25°C. In case the temperature of the coolant indicates that the electrical energy storage 4 has a too high or a too low temperature in relation to said temperature range, it is possible to adjust the cooling effect of the coolant in the radiators 8, 17 by means of the radiator fans 30, 33 and the cooling effect in the chiller 22 by the refrigeration circuit. Due to the fact that the coolant cooling the electrical energy storage 4 provides an additional cooling in the high temperature radiator 8, the cooling system obtains an increased cooling capacity for cooling of the electrical energy storage 4 in the charging mode than in the operating mode. As a consequence, it is substantially always possible to maintain a suitable temperature of the electrical energy storage 4 even during a rapid charging process of the electrical energy storage 4.

The invention is in no way confined to the embodiment to which the drawings refer but may be varied freely within the scopes of the claims. A four way valve 20 is, for example, used to control the coolant flow through the bypass line 18 and the coolant flow to the first connection line 38. It is of course possible to use one valve member controlling the coolant low through the bypass line 18 and one valve member controlling the coolant flow through the first connection line 38.

## Claims

1. An electric power unit for a vehicle (1) comprising a cooling system for the electric power unit, wherein the electric power unit comprises an electric machine (2), an electric energy storage (4) for storing of electrical energy and power electronics (5) for controlling the flow of electrical energy between the electrical energy storage (4) and the electric machine (2), and wherein the cooling system comprises a high temperature circuit (6) with a circulating coolant cooling the power electronics (5) during operation of the vehicle (1), a high temperature radiator (8) arranged in the high temperature circuit (6), a low temperature circuit (15) with a circulating coolant configured to cool the electric energy storage (4) during operation of the vehicle (1), and a low temperature radiator (17) arranged in the low temperature circuit (15), **characterized in that** the cooling system is configured to be set in a charging mode when the electrical energy storage (4) is charged by an external electrical power source (43) and that the cooling system comprises components (20, 38, 40, 41) configured to create a modified flow circuit for the coolant in the charging mode in which the coolant is cooled in the low temperature radiator (17) and in the high temperature radiator (8) before it is directed to the electric energy storage (4) and that said components comprises a first valve member (20) which in the charging mode is configured to direct coolant, via a first connection line (38), from the low temperature circuit (15) to the high temperature circuit in a position upstream of the high temperature radiator (8), and a second valve member (41) which in the charging mode is configured to direct the coolant, back to the low temperature circuit via a second connection line (40) when the coolant has been cooled in the high temperature radiator (8), wherein the connection lines (38, 40) are connected to the low temperature circuit (26) in positions downstream of the low temperature radiator (17) or wherein the connection lines (38, 40) are connected to the low temperature circuit (26) in positions upstream of the low temperature radiator (17).

2. An electric power unit according to claim 1, **characterized in that** the cooling system comprises a one way valve (39) arranged in the high temperature a position upstream of a connection point (38a) of the first connection line (38).

3. An electric power unit according to any one of the preceding claims, **characterized in that** the cooling system comprises a refrigeration system (26) configured to cool the coolant in the low temperature circuit (15) in a chiller (22) and that the coolant is cooled in the chiller (22) before it cools the electrical energy storage (4) in the charging mode.

4. An electric power unit according to any one of the preceding claims, **characterized in that** the cooling system comprises a charging unit (42) configured to receive electric energy from an external power source (43) and transfer it to the electric energy storage (4), and that the cooling system also cools the charging unit (42) in the charging mode.

5. An electric power unit according to any one of the preceding claims, **characterized in that** the cooling system comprises a control unit (12) configured to receive information when electric energy is transferred or is to be transferred from an external electrical power source (43) to the electrical energy storage (4), and to set the cooling system in the charging mode when it is the case.

6. An electric power unit according to claim 5, **characterized in that** the control unit (12) is configured to receive information about a temperature related to the temperature of the electrical energy storage (4), and to control the cooling of the cooling system by means of this information.

7. An electric power unit according to claim 6, **characterized in that** the control unit (12) is configured to control the cooling system such that the temperature of the electrical energy storage (4) is maintained within a predetermined temperature range in the charging mode.

8. An electric power unit according to any one of the claims 5-7, **characterized in that** the control unit (12) is configured to control the speed of at least one radiator fan (30, 33) in order to provide a desired cooling of the coolant in the high temperature radiator (8).

9. An electric power unit according to any one of the claims 5-8, **characterized in that** the control unit (12) is configured to control the speed of at least one radiator fan (30) in order to provide a desired cooling of the coolant in the low temperature radiator (17).

10. An electric power unit according to claim 5, **characterized in that** the control unit (12) is configured to control a compressor (29) in the refrigerant circuit in order to provide a suitable cooling of the coolant in the chiller (22).

11. An electric power unit according to any one of claims 5-10, **characterized in that** the control unit (12) is configured to control the speed of a coolant pump (24) in order to provide a desired coolant flow rate to the electrical energy storage (4).

12. An electric power unit according to any one of the preceding claims, **characterized in that** the high temperature radiator (8) is arranged in a position downstream of the low temperature radiator (17) with respect to the direction of the cooling air stream through the radiators (8, 17).

## Patentansprüche

1. Elektrische Antriebseinheit für ein Fahrzeug (1) mit einem Kühlsystem für die elektrische Antriebseinheit, wobei die elektrische Antriebseinheit eine elektrische Maschine (2), einen elektrischen Energiespeicher (4) zum Speichern von elektrischer Energie und Leistungselektronik (5) zur Steuerung des elektrischen Energieflusses zwischen dem elektrischen Energiespeicher (4) und der elektrischen Maschine (2) aufweist, und wobei das Kühlsystem einen Hochtemperaturkreis (6) mit einem zirkulierenden Kühlmittel, das die Leistungselektronik (5) während eines Betriebs des Fahrzeugs (1) kühlt, einen in dem Hochtemperaturkreis (6) angeordneten Hochtemperaturkühler (8), einen Niedertemperaturkreis (15) mit einem zirkulierenden Kühlmittel, welches dazu eingerichtet ist, den elektrischen Energiespeicher (4) während eines Betriebs des Fahrzeugs (1) zu kühlen, und einen in dem Niedertemperaturkreis (15) angeordneten Niedertemperaturkühler (17) aufweist, **dadurch gekennzeichnet, dass** das Kühlsystem dazu konfiguriert ist, in einen Auflademodus geschaltet zu werden, wenn der elektrische Energiespeicher (4) durch eine externe elektrische Energiequelle (43) aufgeladen wird, und dass das Kühlsystem Komponenten (20, 38, 40, 41) aufweist, die dazu ausgeführt sind, einen modifizierten Strömungskreislauf für das Kühlmittel in dem Auflademodus zu erzeugen, in dem das Kühlmittel in dem Niedertemperaturkühler (17) und in dem Hochtemperaturkühler (8) abgekühlt wird, bevor es zu dem elektrischen Energiespeicher (4) geleitet wird, und dass die Komponenten ein erstes Ventilglied (20), welches in dem Auflademodus dazu eingerichtet ist, Kühlmittel über eine erste Verbindungsleitung (38) aus dem Niedertemperaturkreis (15) in den Hochtemperaturkreis an einer Stelle stromaufwärts des Hochtemperaturkühlers (8) zu leiten, und ein zweites Ventilglied (41) umfassen, das in dem Auflademodus dazu eingerichtet ist, das Kühlmittel über eine zweite Verbindungsleitung (40) zurück in den Niedertemperaturkreis zu leiten, wenn das Kühlmittel in dem Hochtemperaturkühler (8) abgekühlt worden ist, wobei die Verbindungsleitungen (38, 40) an Stellen stromabwärts des Niedertemperaturkühlers (17) mit dem Niedertemperaturkreis (26) verbunden sind oder wobei die Verbindungsleitungen (38, 40) an Stellen stromaufwärts des Niedertemperaturkühlers (17) mit dem Niedertemperaturkreis (26) verbunden sind.

2. Elektrische Antriebseinheit nach Anspruch 1, **dadurch gekennzeichnet, dass** das Kühlsystem ein Einwegventil (39) aufweist, das in dem Hochtemperaturkreis an einer Position stromaufwärts einer Anschlussstelle (38a) der ersten Verbindungsleitung (38) angeordnet ist.

3. Elektrische Antriebseinheit nach einem der vorhergehenden Ansprüche, **dadurch gekennzeichnet, dass** das Kühlsystem ein Kältesystem (26) aufweist, das dazu eingerichtet ist, das Kühlmittel in dem Niedertemperaturkühler (15) in einem Kühlaggregat (22) abzukühlen, und dass das Kühlmittel in dem Kühlaggregat (22) abgekühlt wird, bevor es in dem Auflademodus den elektrischen Energiespeicher (4) kühlt.

4. Elektrische Antriebseinheit nach einem der vorhergehenden Ansprüche, **dadurch gekennzeichnet, dass** das Kühlsystem eine Ladeeinheit (42) aufweist, die dazu eingerichtet ist, elektrische Energie von einer externen Energiequelle (43) zu erhalten und sie in den elektrischen Energiespeicher (4) zu transferieren, und dass das Kühlsystem in dem Auflademodus auch die Ladeeinheit (42) kühlt.

5. Elektrische Antriebseinheit nach einem der vorhergehenden Ansprüche, **dadurch gekennzeichnet, dass** das Kühlsystem eine Steuereinheit (12) aufweist, die dazu eingerichtet ist, Information darüber zu erhalten, wann elektrische Energie von einer externen elektrischen Stromquelle (43) in den elektrischen Energiespeicher (4) transferiert wird oder transferiert werden soll, und das Kühlsystem in den Auflademodus zu schalten, wenn dies der Fall ist.

6. Elektrische Antriebseinheit nach Anspruch 5, **dadurch gekennzeichnet, dass** die Steuereinheit (12) dazu eingerichtet ist, Information über eine die Temperatur des elektrischen Energiespeichers (4) betreffende Temperatur zu erhalten und das Kühlen des Kühlsystems mittels dieser Information zu steuern.

7. Elektrische Antriebseinheit nach Anspruch 6, **dadurch gekennzeichnet, dass** die Steuereinheit (12) dazu eingerichtet ist, das Kühlsystem solchermaßen zu steuern, dass die Temperatur des elektrischen Energiespeichers (4) in dem Auflademodus innerhalb eines vorbestimmten Temperaturbereichs gehalten wird.

8. Elektrische Antriebseinheit nach einem der Ansprüche 5 bis 7, **dadurch gekennzeichnet, dass** die Steuereinheit (12) dazu eingerichtet ist, die Drehzahl zumindest eines Kühlerlüfters (30, 33) dazu zu steuern, eine gewünschte Abkühlung des Kühlmittels in dem Hochtemperaturkühler (8) zu erzielen.

9. Elektrische Antriebseinheit nach einem der Ansprüche 5 bis 8, **dadurch gekennzeichnet, dass** die Steuereinheit (12) dazu eingerichtet ist, die Drehzahl zumindest eines Kühlerlüfters (30) dazu zu steuern, eine gewünschte Abkühlung des Kühlmittels in dem Niedertemperaturkühler (17) zu erzielen.

10. Elektrische Antriebseinheit nach Anspruch 5, **dadurch gekennzeichnet, dass** die Steuereinheit (12) dazu eingerichtet ist, einen Kompressor (29) in dem Kältekreislauf dazu zu steuern, eine passende Abkühlung des Kühlmittels in dem Kühlaggregat (22) zu erzielen.

11. Elektrische Antriebseinheit nach einem der Ansprüche 5 bis 10, **dadurch gekennzeichnet, dass** die Steuereinheit (12) dazu eingerichtet ist, die Drehzahl einer Kühlmittelpumpe (24) dazu zu steuern, einen gewünschten Kühlmittelstrom zu dem elektrischen Energiespeicher (4) zu erzielen.

12. Elektrische Antriebseinheit nach einem der vorhergehenden Ansprüche, **dadurch gekennzeichnet, dass** der Hochtemperaturkühler (8) hinsichtlich der Richtung des Kühlluftstroms durch die Kühler (8, 17) an einer Position stromabwärts des Niedertemperaturkühlers (17) angeordnet ist.

## Revendications

1. Unité de puissance électrique pour un véhicule (1) comprenant un système de refroidissement pour l'unité de puissance électrique, dans laquelle l'unité de puissance électrique comprend une machine électrique (2), un stockage d'énergie électrique (4) pour stocker de l'énergie électrique et de l'électronique de puissance (5) pour commander le flux d'énergie électrique entre le stockage d'énergie électrique (4) et la machine électrique (2), et dans laquelle le système de refroidissement comprend un circuit haute température (6) avec un liquide de refroidissement en circulation refroidissant l'électronique de puissance (5) pendant le fonctionnement du véhicule (1), un radiateur haute température (8) disposé dans le circuit haute température (6), un circuit basse température (15) avec un liquide de refroidissement en circulation configuré pour refroidir le stockage d'énergie électrique (4) pendant le fonctionnement du véhicule (1), et un radiateur basse température (17) disposé dans le circuit basse température (15), **caractérisée en ce que** le système de refroidissement est configuré pour être réglé dans un mode de charge lorsque le stockage d'énergie électrique (4) est chargé par une source de puissance électrique externe (43) et **en ce que** le système de refroidissement comprend des composants (20, 38, 40, 41) configurés pour créer un circuit d'écoulement modifié pour le liquide de refroidissement dans le mode de charge dans lequel le liquide de refroidissement est refroidi dans le radiateur basse température (17) et dans le radiateur haute température (8) avant d'être dirigé vers le stockage d'énergie électrique (4) et **en ce que** lesdits composants comprennent un premier élément de vanne (20) qui, dans le mode de charge, est configuré pour diriger le liquide de refroidissement, via une première conduite de raccordement (38), du circuit basse température (15) vers le circuit haute température dans une position en amont du radiateur haute température (8), et un second élément de vanne (41) qui, en mode de charge, est configuré pour diriger le liquide de refroidissement, en retour vers le circuit basse température via une seconde conduite de raccordement (40) lorsque le liquide de refroidissement a été refroidi dans le radiateur haute température (8), dans lequel les conduites de raccordement (38, 40) sont raccordées au circuit basse température (26) dans des positions en aval du radiateur basse température (17) ou dans lequel les conduites de raccordement (38, 40) sont raccordées au circuit basse température (26) dans des positions en amont du radiateur basse température (17).

2. Unité de puissance électrique selon la revendication 1, **caractérisée en ce que** le système de refroidissement comprend un clapet antiretour (39) disposé dans la haute température une position en amont d'un point de raccordement (38a) de la première conduite de raccordement (38).

3. Unité de puissance électrique selon l'une quelconque des revendications précédentes, **caractérisée en ce que** le système de refroidissement comprend un système de réfrigération (26) configuré pour refroidir le liquide de refroidissement dans le circuit basse température (15) dans un refroidisseur (22) et **en ce que** le liquide de refroidissement est refroidi dans le refroidisseur (22) avant qu'il refroidisse le stockage d'énergie électrique (4) dans le mode de charge.

4. Unité de puissance électrique selon l'une quelconque des revendications précédentes, **caractérisée en ce que** le système de refroidissement comprend une unité de charge (42) configurée pour recevoir de l'énergie électrique depuis une source de puissance externe (43) et la transférer au stockage d'énergie électrique (4), et **en ce que** le système de refroidissement refroidit également l'unité de charge (42) dans le mode de charge.

5. Unité de puissance électrique selon l'une quelconque des revendications précédentes, **caractérisée en ce que** le système de refroidissement comprend une unité de commande (12) configurée pour recevoir des informations lorsque l'énergie électrique est transférée ou doit être transférée d'une source de puissance électrique externe (43) vers le stockage d'énergie électrique (4), et pour régler le système de refroidissement dans le mode de charge lorsque tel est le cas.

6. Unité de puissance électrique selon la revendication 5, **caractérisée en ce que** l'unité de commande (12) est configurée pour recevoir des informations concernant une température liée à la température du stockage d'énergie électrique (4), et pour commander le refroidissement du système de refroidissement au moyen de ces informations.

7. Unité de puissance électrique selon la revendication 6, **caractérisée en ce que** l'unité de commande (12) est configurée pour commander le système de refroidissement de telle sorte que la température du stockage d'énergie électrique (4) est maintenue à l'intérieur d'une plage de température prédéterminée dans le mode de charge.

8. Unité de puissance électrique selon l'une quelconque des revendications 5 à 7, **caractérisée en ce que** l'unité de commande (12) est configurée pour commander la vitesse d'au moins un ventilateur de radiateur (30, 33) afin de fournir un refroidissement souhaité du liquide de refroidissement dans le radiateur haute température (8).

9. Unité de puissance électrique selon l'une quelconque des revendications 5 à 8, **caractérisée en ce que** l'unité de commande (12) est configurée pour commander la vitesse d'au moins un ventilateur de radiateur (30) afin de fournir un refroidissement souhaité du liquide de refroidissement dans le radiateur basse température (17).

10. Unité de puissance électrique selon la revendication 5, **caractérisée en ce que** l'unité de commande (12) est configurée pour commander un compresseur (29) dans le circuit de fluide frigorifique afin de fournir un refroidissement approprié du liquide de refroidissement dans le refroidisseur (22).

11. Unité de puissance électrique selon l'une quelconque des revendications 5 à 10, **caractérisée en ce que** l'unité de commande (12) est configurée pour commander la vitesse d'une pompe de liquide de refroidissement (24) afin de fournir un débit de liquide de refroidissement souhaité au stockage d'énergie électrique (4).

12. Unité de puissance électrique selon l'une quelconque des revendications précédentes, **caractérisée en ce que** le radiateur haute température (8) est disposé dans une position en aval du radiateur basse température (17) par rapport à la direction du courant d'air de refroidissement à travers les radiateurs (8, 17) .
